# EUROPÄISCHE PATENTANMELDUNG

(11) **EP 4 465 152 A2**
(43) Veröffentlichungstag der Anmeldung: **20.11.2024**
(21) Anmeldenummer: 24172086.1
(22) Anmeldetag: 24.04.2024
(51) Int. Cl.: G06F 3/01, F15B 15/00

(54) **STELLEINRICHTUNG**

(30) Priorität: 24.04.2023 DE 102023110309
(71) Anmelder: Tskin UG, 14469 Potsdam (DE)
(72) Erfinder: Reiser, Hauke, 14469 Potsdam (DE)
(74) Vertreter: Bierschneider, Walter

(57) **Zusammenfassung**

Stelleinrichtung mit einem flächigen, plattenförmigen Bauteil (1) mit zumindest einer, bevorzugt einer Mehrzahl von pneumatischen oder hydraulischen Stelleinheiten (18), wobei die Stelleinheit (18) mit zumindest einer als Hebekissen wirkenden Membran (13, 20) ausgebildet ist, die eine mit Druckmedium, zum Beispiel Druckluft, ein anderes Gas oder Flüssigkeit, befüllbare Druckkammer (15) begrenzt. Erfindungsgemäß ist die Druckkammer (15) der Membran (13, 20) mit Überdruck und/oder Unterdruck ansteuerbar, und zwar unter Formänderung der Membran (13, 20). Der Membran (13, 20) ist eine 3D-Struktur (37) zugeordnet ist.

## Beschreibung

Die Erfindung betrifft eine Stelleinrichtung mit einem flächigen, plattenförmigen Bauteil nach dem Oberbegriff des Anspruches 1.

Eine solche Stelleinrichtung ist in beliebigen Anwendungsbereichen einsetzbar und kann beispielhaft im Interieurbereich und/oder im Exterieurbereich verbaut werden. Die Stelleinrichtung kann optional mit unterschiedlichen Zusatzfunktionen ausgestattet sein, etwa einer Displayfunktion und/oder einer Bedienfunktion zum Betätigen diverser Funktionselemente.

Eine gattungsgemäße Stelleinrichtung weist ein flächiges, plattenförmiges Bauteil auf, das mit zumindest einer, bevorzugt einer Mehrzahl von pneumatischen Stelleinheiten ausgebildet ist. Die pneumatische Stelleinheit ist über eine im Bauteil integrierte Druckleitung mit einer bauteilseitigen Anschlussstelle verbunden, die mit einer Druckquelle koppelbar ist.

Die aus dem Stand der Technik bekannten pneumatischen Stelleinrichtungen sind konstruktiv aufwendig sowie bauteilintensiv aufgebaut und daher nur sehr bedingt in einer Großserie fertigbar.

Aus der EP 3 144 770 A1 ist ein System sowie ein Verfahren zur Bereitstellung haptischer Effekte bekannt, und zwar in Antwort auf eine Verformung einer Abdeckung eines Elektrogeräts. Aus der EP 3 285 144 B1 ist ein System zur haptischen Interaktion mit virtuellen Objekten bekannt. Aus der WO 2014/164274 A1 ist ein Interaktionsdisplay bekannt.

Die Aufgabe der Erfindung besteht darin, eine pneumatische oder hydraulische Stelleinrichtung bereitzustellen, die im Vergleich zum Stand der Technik konstruktiv einfach sowie bauteilreduziert aufgebaut ist und/oder eine gesteigerte Funktionalität aufweist.

Die Aufgabe ist durch die Merkmale des Anspruches 1 gelöst. Bevorzugte Weiterbildungen der Erfindung sind in den Unteransprüchen offenbart.

Die Erfindung geht von einer Stelleinrichtung mit einem flächigen, plattenförmigen Bauteil aus. Das Bauteil weist zumindest eine, bevorzugt eine Mehrzahl von pneumatischen oder hydraulischen Stelleinheiten auf. Die Stelleinheit ist mit einer als Hebekissen wirkenden Membran ausgebildet. Diese begrenzt eine mit einem Druckmedium, zum Beispiel Druckluft, einem anderen Gas oder Flüssigkeit, befüllbare Druckkammer. Gemäß dem kennzeichnenden Teil des Anspruches 1 ist die Druckkammer der Membran mit Überdruck und/oder mit Unterdruck ansteuerbar, und zwar unter Formänderung der Membran. Der Membran ist einer 3D-Struktur zugeordnet.

In einer ersten Ausführungsvariante kann die 3D-Struktur innerhalb der Druckkammer der als Hebekissen wirkenden Membran positioniert sein. In diesem Fall kann sich bei einem ersten Druckniveau in der Druckkammer, insbesondere bei Unterdruck, die 3D-Struktur in der Membran abzeichnen. Von der Bauteil-Dekorseite betrachtet ergibt sich daher eine an die 3D-Struktur konturangepasste Membran-Oberfläche. Bei einem zweiten Druckniveau, insbesondere bei zum Beispiel geringfügigem Überdruck oder im drucklosen Zustand, löst sich dagegen die in der Membran gebildete Abzeichnung der 3D-Struktur wieder auf und wird die Membran-Oberfläche gegebenenfalls wieder glattflächig.

In einer technischen Umsetzung kann das Bauteil einen Mehrlagenaufbau aufweisen, in dem die Einzellagen in Haftverbindung, zum Beispiel durch Verklebung, zusammengefügt sind. Beispielhaft kann der Mehrlagenaufbau aus einer mittleren Funktionsträgerlage bestehen, die an ihrer Sichtseite bzw. Dekorseite und an ihrer davon abgewandten Unterseite jeweils mit einer Elastomerlage überdeckt ist. Diese Einzellagen können in einem Fertigungsprozess additiv aufeinander appliziert werden. Zusätzlich können auch unterschiedliche weitere Funktionslagen in den Mehraufbau integriert werden.

Die 3D-Struktur kann bevorzugt materialeinheitlich und/oder einstückig an der Funktionsträgerlage angeformt sein. Zudem kann die 3D-Struktur eine Mehrzahl von zum Beispiel regelmäßig angeordneten und/oder voneinander beabstandeten Vorsprüngen aufweisen. Diese ragen beispielhaft über eine vordefinierte Profilhöhe von der Funktionsträgerlage ab.

In einer zweiten Ausführungsvariante kann die 3D-Struktur auf einer der Bauteil-Dekorseite zugewandten Membran-Oberfläche ausgebildet sein. Bei Überdruck-Beaufschlagung wölbt sich die Membran sphärisch auf. Im Unterschied dazu ist bei Unterdruck-Beaufschlagung die Membran in ihre Ausgangsposition zusammengezogen. Entsprechend ergeben sich durch Druckänderung in der Druckkammer unterschiedliche Ausrichtungen der 3D-Struktur.

In einer dritten Ausführungsvariante kann die pneumatische oder hydraulische Stelleinheit aus zwei als Hebekissen wirkende Membrane aufgebaut sein, nämlich einer inneren Membran und einer äußeren Membran. Die beiden Membrane können in einer Hubrichtung beziehungsweise Bauteil-Dickenrichtung übereinander positioniert sein. Zudem können die Druckkammern der beiden Membrane voneinander unabhängig ansteuerbar sein.

Beispielhaft kann in einer Weiterbildung auf der inneren Membran eine 3D-Struktur ausgebildet sein. Diese ist von der äußeren Membran überdeckt. Bei einem ersten Druckniveau in der Druckkammer der äußeren Membran, insbesondere bei Unterdruck, zeichnet sich daher die 3D-Struktur in der äußeren Membran ab. Die äußere Membran ist daher mit einer an die 3D-Struktur konturangepassten Membran-Oberfläche ausgebildet. Zudem kann bei Überdruck in der Druckkammer sich die innere Membran sphärisch aufwölben, wodurch die Ausrichtung der 3D-Struktur variierbar ist. Im dritten Ausführungsbeispiel sind die Druckansteuerung der inneren Membran sowie die Druckansteuerung der äußeren Membran einander beliebig überlagbar, wodurch der Stelleinheit unterschiedlichste Bewegungsmuster aufprägbar sind.

Durch eine gezielte pneumatische Ansteuerung des Segmentfelds kann die Oberflächenform und/oder Oberflächenstruktur des Bauteils gezielt transformiert werden. Je nach pneumatischer Ansteuerung ist zum Beispiel eine sich wellenartig verformende Bauteil-Oberfläche generierbar. Alternativ und/oder zusätzlich kann das Segmentfeld auch mit unterschiedlichen Zusatzfunktionen ausgestattet sein, etwa einer Displayfunktion und/oder einer Bedienfunktion zum Betätigen diverser Funktionselemente. Das plattenförmige Bauteil kann in einer weiteren Ausführungsvariante auf Freiformflächen, zum Beispiel einer Instrumententafel, montiert werden.

Das plattenförmige Bauteil ist nicht auf eine bauteilsteife sowie ebenflächige Gestaltung beschränkt. Vielmehr kann das plattenförmige Bauteil auch ausreichend verformbar ausgeführt sein. In diesem Fall kann das plattenförmige Bauteil auf beliebige Freiformflächen montiert werden.

Fertigungstechnisch günstig können die Membrane der pneumatischen Stelleinheiten materialeinheitliche Bestandteile einer Elastomerlage sein. Zudem kann die Elastomerlage sowohl mit der Dekorlage als auch mit der Funktionsträgerlage in fester Haftverbindung sein. Bei einem solchen Lagenaufbau kann die jeweilige Membran ein Elastomerlagen-Abschnitt sein, der zur Funktionsträgerlage hin anbindungsfrei, das heißt ohne Haftverbindung, ist.

Nachfolgend sind ein nicht von der Erfindung umfasstes Vergleichsbeispiel sowie Ausführungsbeispiele der Erfindung anhand der beigefügten Figuren beschrieben.

Es zeigen:
- Figuren 1 bis 5: unterschiedliche Ansichten einer Stelleinrichtung gemäß einem nicht von der Erfindung umfassten Vergleichsbeispiel;
- Figur 6 bis 12: unterschiedliche Ansichten des Ausführungsbeispiels.

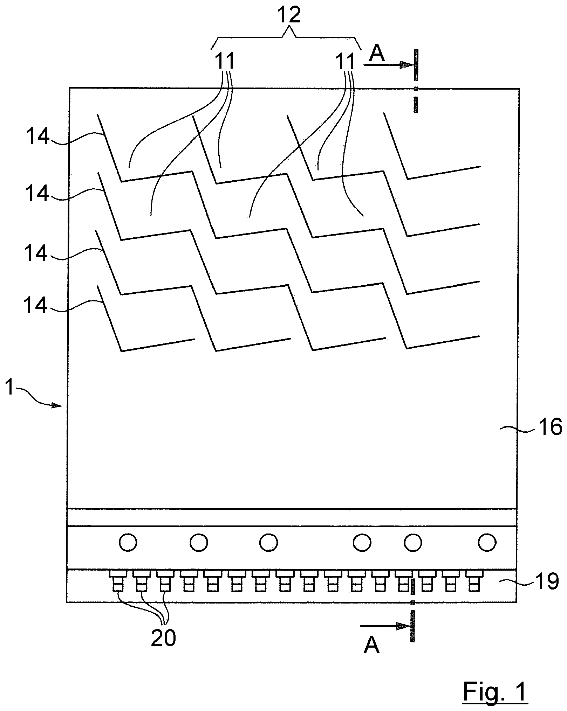

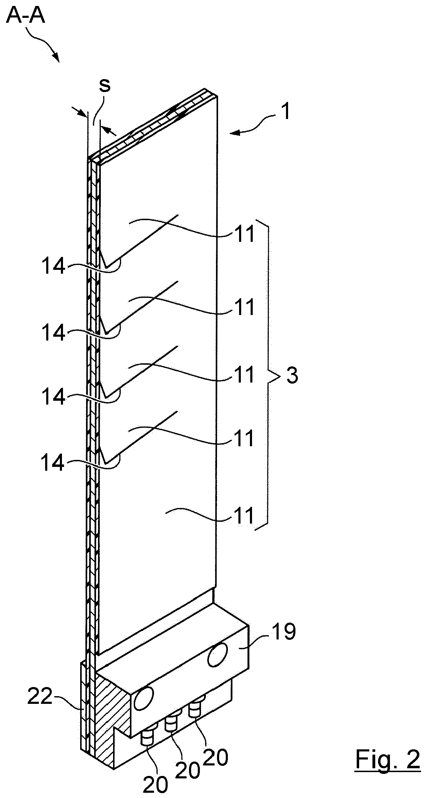

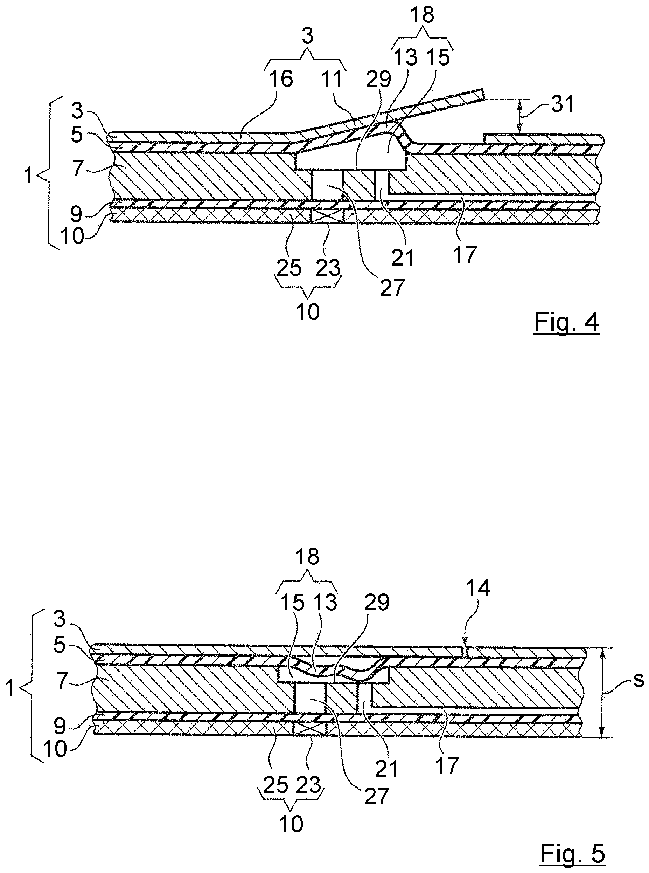

In den Figuren 1 bis 5 ist eine Stelleinrichtung gemäß einem nicht von der Erfindung umfassten Vergleichsbeispiel gezeigt. Die Stelleinrichtung weist ein flächiges, plattenförmiges Bauteil 1 auf, das als ein Mehrlagenaufbau gefertigt ist und beispielhaft eine Bauteildicke s (Figur 2 oder 5) von 3 bis 5 mm aufweisen kann. Das Bauteil 1 besteht gemäß der Figur 4 oder 5 aus einer oberen Dekorlage 3, gefolgt von einer Elastomerlage 5, einer Funktionsträgerlage 7, einer weiteren Elastomerlage 9 und einer abschließenden unteren LED-Lage 10. Sämtliche Einzellagen 3, 5, 7, 9, 10 des Bauteils 1 sind durch Haftverbindung, zum Beispiel Verklebung, stoffschlüssig miteinander verbunden. Die Dekorlage 3 kann exemplarisch eine Dekorlage im Interieurbereich eines Fahrzeugs sein. Beispielhaft kann die Dekorlage 3 aus einem dünnen Metallblech oder aus einem Holzfurnier gebildet sein. Alternativ dazu kann die Dekorlage 3 auch aus einem flexibleren Material, etwa einer Textillage oder aus Leder, ausgebildet sein. Die Funktionsträgerlage 7 kann, wie auch die beiden Elastomerlagen 5, 9, aus Elastomermaterial gefertigt sein.

Wie aus den Figuren 1, 2 oder 3a weiter hervorgeht, weist die Dekorlage 3 eine Vielzahl von Dekorlagen-Segmenten bzw. Hebekissen-Deckeln 11 auf, die zu einem Segmentfeld 12 (Figur 1) gruppiert sind. Die Dekorlagen-Segmente 11 sind jeweils durch einen Freischnitt 14 aus einem Dekorlagen-Grundkörper 16 herausgeschnitten. Das Segmentfeld 12 kann beispielhaft als ein haptisches Display und/oder als ein Bedienfeld verwendet werden, bei dem die einzelnen Dekorlagen-Segmente 11 mit Hilfe von nachfolgend beschriebenen pneumatischen Stelleinheiten 18 zwischen einer drucklosen Ausgangsposition (Figur 5) und einer druckbeaufschlagten Hubposition (Figur 4) hubverstellbar sind. Hierbei kann sich jedes der Dekorlagen-Segmente 11 klappenartig um eine Klappachse zwischen der Ausgangsposition und der Hubposition schwenkverstellen.

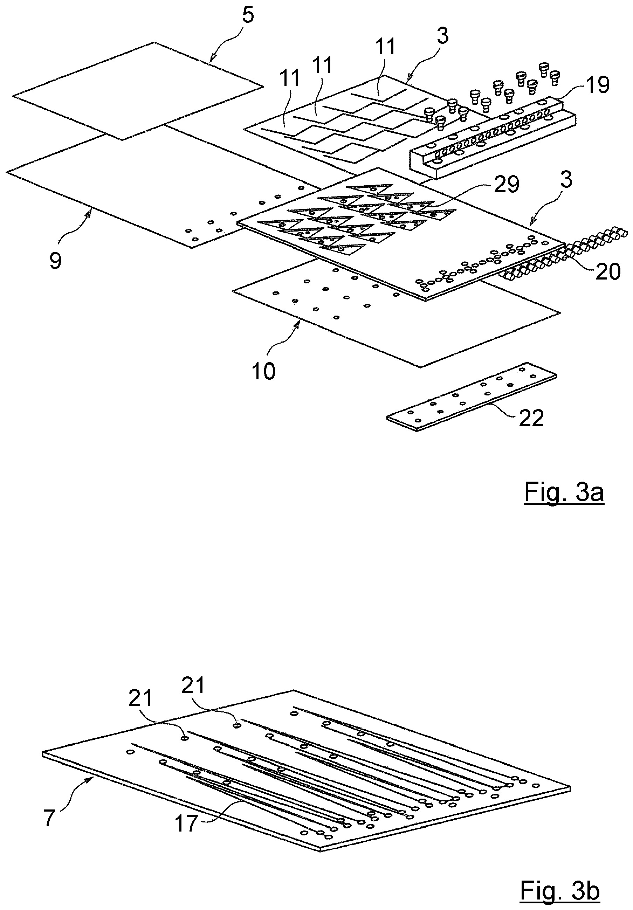

Jedem der Dekorlagen-Segmente 11 ist jeweils eine eigene pneumatische Stelleinheit 18 zugeordnet, die eine als Hebekissen wirkende Membran 13 aufweist, die eine mit Druckluft beaufschlagbare Druckkammer 15 begrenzt. Gemäß den Figuren 4 oder 5 ist die Membran 13 als ein materialeinheitlicher und einstückiger Abschnitt der Elastomerlage 5 ausgebildet. Die Membran 13 ist gegenüber der Funktionsträgerlage 7 anbindungsfrei, das heißt ohne Haft- oder Klebverbindung, damit sich die Membran 13 bei einer Druckbeaufschlagung der Druckkammer 15 frei ausdehnen kann. Wie aus der Figur 3b hervorgeht, sind an der Unterseite der Funktionsträgerlage 7 eine Vielzahl von Druckleitungen 17 angeordnet. Jede dieser Druckleitungen 17 verbindet eine Druckkammer 15 mit einer nicht gezeigten Druckluftquelle. Im Zusammenbauzustand sind die Druckleitungen 17 zu einer Anschluss-/Verteilereinheit 19 geführt. Diese ist in der Figur 2 zweiteilig aus einer Luftanschlussleiste und einer Konterleiste 22 ausgebildet. Die Luftanschlussleiste ist unter Zwischenklemmung des flächigen Bauteils 1 an der Konterleiste 22 (Figur 2 oder 3a) befestigt. Zudem weist die Anschluss-/Verteilereinheit 19 Luftanschluss-Elemente 20 auf, die in Verbindung mit der nicht gezeigten Druckluftquelle bringbar sind. Gemäß der Figur 2 sind also Komponenten der Anschluss-/Verteilereinheit 19 (Luftanschlussleiste und Konterleiste 22) beidseitig des Bauteils 1 positioniert, das heißt sowohl auf dessen Bauteil-Unterseite als auch auf dessen einsehbarer Dekorseite, wodurch gegebenenfalls das Erscheinungsbild des zum Beispiel im Fahrzeug-Interieurbereich verbauten Bauteils 1 beeinträchtigt ist.

Die pneumatische Ansteuerung der Druckkammern 15 der Dekorlagen-Segmente 11 kann über eine nicht gezeigte elektronische Steuereinheit in beliebiger Weise durchgeführt werden. So können die Dekorlagen-Segmente 11 voneinander unabhängig in beliebiger Kombination pneumatisch angesteuert werden, um zum Beispiel diverse Oberflächengeometrien oder -muster in der Dekorlage 3 des Bauteils 1 zu generieren.

Im Vergleichsbeispiel sind die Druckleitungen 17 ausschließlich auf der Unterseite der Funktionsträgerlage 7 positioniert, während die Membrane 13 mitsamt Druckkammern 15 auf der gegenüberliegenden Oberseite der Funktionsträgerlage 7 angeordnet sind. Auf diese Weise können die Druckleitungen 17 nach einem beliebigen Leitungsmuster an der Unterseite der Funktionsträgerlage 7 verlegt sein, ohne mit den Druckkammern 15 zu kollidieren. Fertigungstechnisch einfach sowie bauraumsparend sind die Druckleitungen 17 als nutförmige Vertiefungen in die Unterseite der Funktionsträgerlage 7 eingearbeitet. Die nutförmigen Vertiefungen sind mit der unteren Elastomerlage 9 überdeckt. Zudem sind die nutförmigen Vertiefungen über jeweils einen Strömungsdurchlass 21, der in der Funktionsträgerlage 7 ausgebildet ist, mit der zugeordneten Druckkammer 15 verbunden.

Gemäß den Figuren 4 und 5 ist die LED-Lage 10 aus einzelnen LEDs 23 hergestellt, die in einem Elastomermaterial 25 der LED-Lage 10 eingegossen sind. Jeder pneumatischen Stelleinheit 18 ist jeweils eine LED 23 zugeordnet. Die LED 23 ist dabei in der Dickenrichtung betrachtet in Flucht zur Membran 13 angeordnet. Zudem ist die LED 23 über einen, in der Funktionsträgerlage 7 ausgebildeten Lichtdurchlass 27 in optischer Verbindung mit der Oberseite der Funktionsträgerlage 7. Der Lichtdurchlass 27 kann beliebig ausgebildet sein, etwa als ein in der Funktionsträgerlage 7 eingebetteter Lichtleiter-Einleger bzw. als ein Diffusor.

In der Figur 5 ist die pneumatische Stelleinheit 18 in einem drucklosen Zustand dargestellt. Demnach befindet sich das Dekorlagen-Segment 11 in seiner horizontalen Ausgangsposition, in der das Dekorlagen-Segment 11 flächenbündig mit dem umgebenden Dekorlagen-Grundkörper 16 abschließt. Die biegeschlaffe Membran 13 ist in einer als Stauraum wirkenden Vertiefung 29 angeordnet, die in der Oberseite der Funktionsträgerlage 7 eingearbeitet ist.

In der Figur 4 ist die pneumatische Stelleinheit 18 in einem druckbeaufschlagten Zustand gezeigt. Demnach ist die Druckkammer 15 der Membran 13 mit Druckluft beaufschlagt, wodurch sich die Membran 13 ausdehnt. Die sich ausdehnende Membran 13 klappt das Dekorlagen-Segment 11 um die Klappachse von seiner Ausgangsposition (Figur 5) in seine Hubposition hoch. In der Hubposition ist die Dekorlage 3 über einen Spalt 31 nach außen geöffnet, durch den das von der LED 23 erzeugte Licht austreten kann. Für einen solchen Lichtaustritt sind die beiden Elastomerlagen 5, 9 jeweils lichtdurchlässig ausgeführt.

Das Bauteil 1 kann eine adaptive Oberfläche bereitstellen, die aktiv oder reaktiv reagieren kann. Zudem ist das Bauteil 1 mit reduziertem Bauteilgewicht und reduzierter Bauteildicke ausgebildet. Das Bauteil 1 ist zudem nicht biegesteif, sondern verformbar ausführbar, wodurch die Einbaumöglichkeiten des Bauteils 1 - im Vergleich zu einem biegesteifen Bauteil - gesteigert sind.

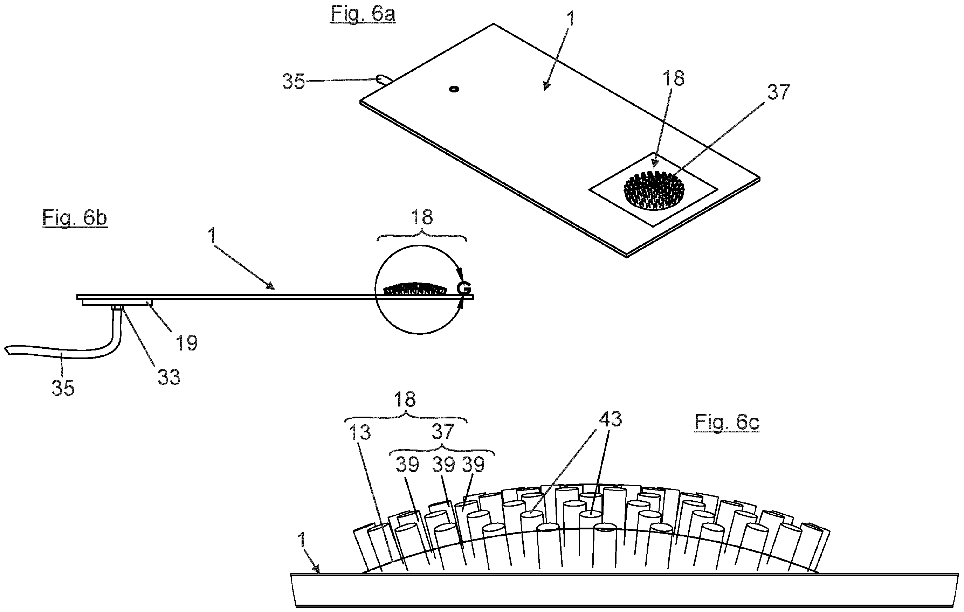

In Abkehr von dem oben dargelegten Vergleichsbeispiel ist nachfolgend anhand der Figuren 6 bis 11 die erfindungsgemäße Stelleinrichtung beschrieben. Der Aufbau und die Funktionsweise der erfindungsgemäßen Stelleinrichtung gleicht im Prinzip dem Aufbau und der Funktionsweise des Vergleichsbeispiels der Figuren 1 bis 5. Von daher wird auf die Vorbeschreibung verwiesen. Merkmale des Vergleichsbeispiels, die dem Gegenstand der Ansprüche nicht entgegenstehen, können auch in den Ausführungsbeispielen der Figuren 6 bis 11 realisiert werden.

In den Figuren 6a bis 6c ist in unterschiedlichen Ansichten eine Stelleinrichtung mit einem flächigen Bauteil 1 gemäß einem ersten Ausführungsbeispiel gezeigt. Das flächige Bauteil 1 ist über die Anschluss-/Verteilereinheit 19 an einer Druckquelle anschließbar. Die Anschluss-/Verteilereinheit 19 ist in der Figur 6b beispielhaft als eine einfache Anschlussplatte mit einem Anschlussstutzen 33 ausgebildet, an dem eine zur Druckquelle führende Versorgungsleitung 35 angeschlossen ist. Aus Gründen der Übersichtlichkeit weist das in den Figuren 6a bis 6c gezeigte Bauteil 1 lediglich eine einzige pneumatische Stelleinheit 18 mit einer als Hebekissen wirkenden Membran 13 auf, die über eine Druckleitung 17 pneumatisch ansteuerbar ist.

In einer tatsächlichen Ausführung kann dagegen das Bauteil 1 (analog zur Figur 2) ein Feld 12 mit einer Vielzahl pneumatischer Stelleinheiten 18 aufweisen. In diesem Fall kann die Anschluss-/Verteilereinheit 19 als ein in den Figuren nicht gezeigter Ventilblock ausgebildet sein. Dieser ist mit einem nicht gezeigten elektrischen Steuergerät in Signalverbindung, um die pneumatischen Stelleinheiten 18 unabhängig voneinander zielgerichtet pneumatisch anzusteuern.

Im Unterschied zum Vergleichsbeispiel (Figuren 1 bis 5) ist das flächige Bauteil 1 jedoch ohne Dekorlage 3 sowie ohne Dekorlagen-Segmente 11 realisiert. Entsprechend ist die Elastomerlage 5 mitsamt der als Hebekissen wirkenden Membran 13 von der Bauteil-Dekorseite sichtbar.

Wie aus den Figuren 6 bis 8 weiter hervorgeht, ist die obere Seite der als Hebekissen wirkenden Membran 13 nicht glattflächig ausgeführt, sondern mit einer 3D-Struktur 37 versehen. Die 3D-Struktur 37 besteht aus einer Mehrzahl von regelmäßig angeordneten sowie voneinander beabstandeten Vorsprüngen 39 in Form zylindrischer Stifte, die materialeinheitlich und einstückig an der Funktionsträgerlage 7 angeformt sind. Die Vorsprünge 39 können in einer tatsächlichen Ausführung nicht nur auf der Membran-Oberfläche, sondern zusätzlich auch über die gesamte Elastomerlage 5 regelmäßig verteilt positioniert sein.

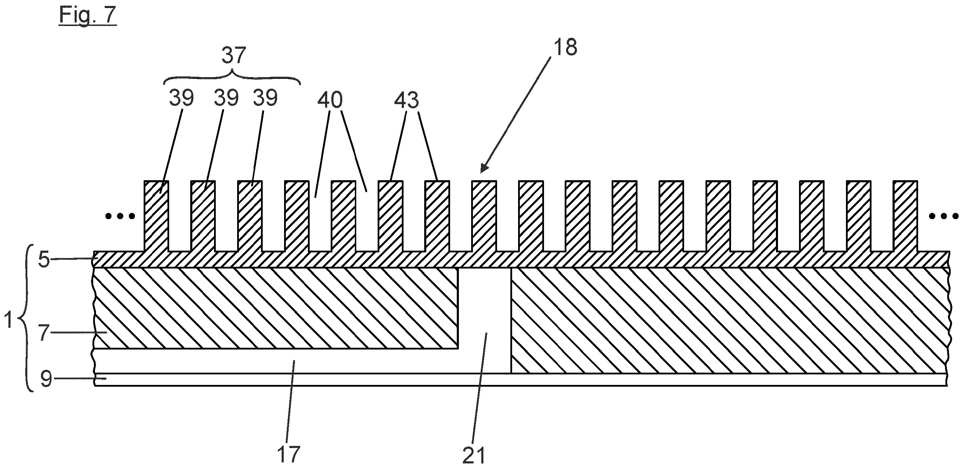

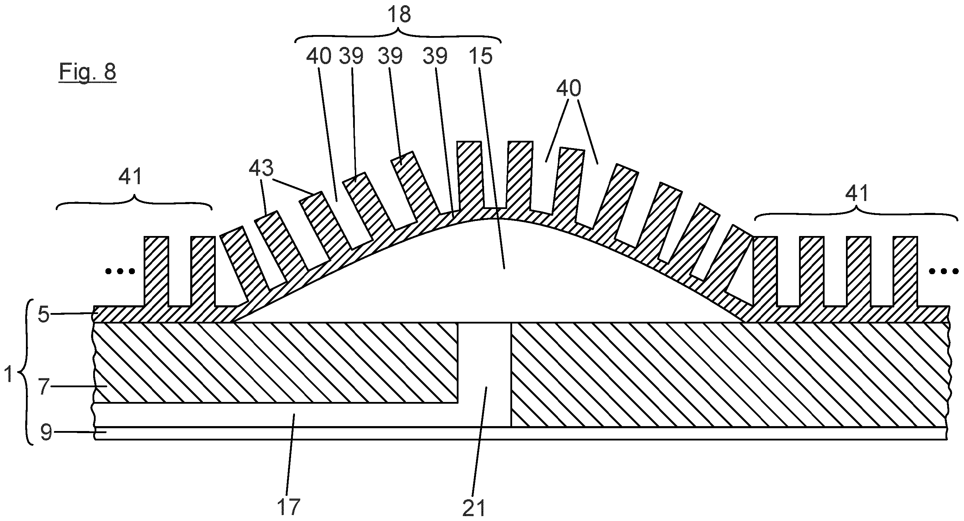

In der Figur 7 ist die Stelleinheit 18 in einem drucklosen Zustand gezeigt, in dem die als Hebekissen wirkende Membran 13 flächig auf der Funktionsträgerlage 7 aufliegt. Die zylindrischen Stifte 39 sind sowohl auf der Membran-Oberfläche als auch in angrenzenden Bauteilbereichen 41 (Figur 8) zueinander achsparallel in Bauteil-Dickenrichtung ausgerichtet. In der Figur 8 ist die Stelleinheit 18 pneumatisch angesteuert; das heißt die Druckkammer 15 der Stelleinheit 18 ist mit Überdruck beaufschlagt. Die als Hebekissen wirkende Membran 13 wird daher nach oben sphärisch aufgewölbt, so dass sich die Ausrichtung der darauf positionierten zylindrischen Stifte 39 gegenüber den, in den angrenzenden Bauteil-Bereichen 41 befindlichen zylindrischen Stiften 39 ändert.

In einer vorteilhaften Ausführungsvariante kann das Bauteil 1 an seiner Bauteil-Unterseite - analog zum Vergleichsbeispiel - mit einer LED-Lage 10 ausgebildet sein. Zudem können die untere Elastomerlage 9, die Funktionsträgerlage 7 sowie die obere Elastomerlage 5 zumindest im Bereich der Stelleinheit 18 lichtdurchlässig gestaltet sein. In diesem Fall wird das mittels der LEDs 23 erzeugte Licht in Bauteil-Dickenrichtung durch das Bauteil 1 geleitet. Die auf der oberen Elastomerlage 5 angeformten zylindrischen Stifte 39 wirken dabei als Lichtleiter, an deren oberer Stirnseite 43 das Licht ausgekoppelt wird.

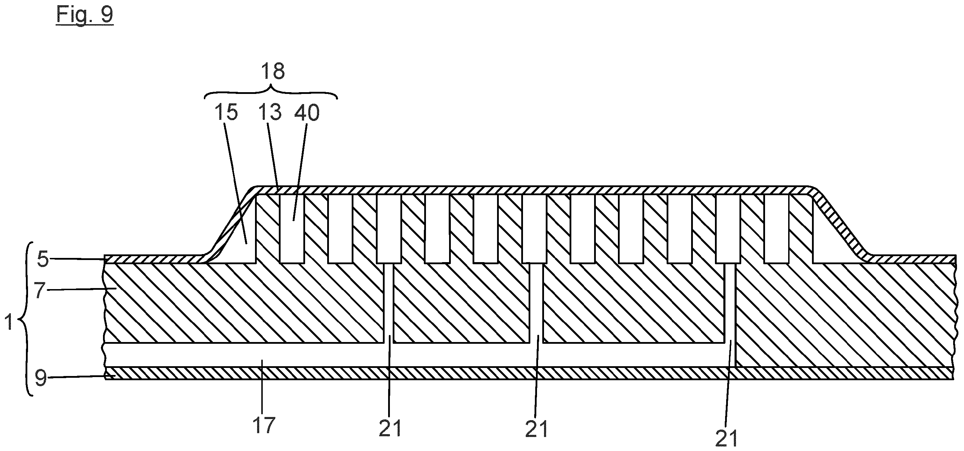

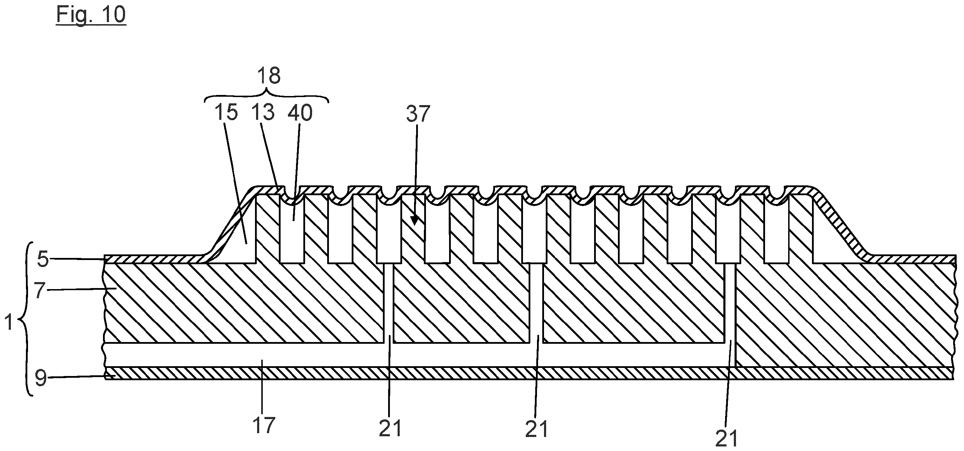

In den Figuren 9 und 10 ist ein zweites Ausführungsbeispiel der Erfindung gezeigt. Im Unterschied zum ersten Ausführungsbeispiel (Figuren 6 bis 8) ist in den Figuren 9 und 10 die 3D-Struktur 37 nicht auf der Membran-Oberseite angeformt, sondern vielmehr unmittelbar an der Funktionsträgerlage 7 angeformt. Die 3D-Struktur 37 befindet sich innerhalb der von der Membran 13 begrenzten Druckkammer 15. Die Membran 13 überdeckt daher die 3D-Struktur 37.

In der Figur 9 ist die pneumatische Stelleinheit 18 in ihrem drucklosen Zustand angedeutet. Demzufolge ist die Membran 13 in Anlage mit den oberen Stirnseiten 43 der zylindrischen Stifte 39, wodurch sich ein ebenflächiges Erscheinungsbild der Membran-Oberfläche ergibt. Im Unterschied dazu ist in der Figur 10 die von der Membran 13 begrenzte Druckkammer 15 mit einem Unterdruck beaufschlagt. In diesem Fall wird die Membran 13 in die Zwischenräume 40 zwischen den hohlzylindrischen Stiften 39 gezogen. Die 3D-Struktur 37 zeichnet sich daher auf der Membran-Oberfläche konturangepasst ab. Sobald die Druckkammer 15 wieder drucklos geschaltet ist, löst sich die in der Membran 13 gebildete Abzeichnung der 3D-Struktur 37 wieder auf.

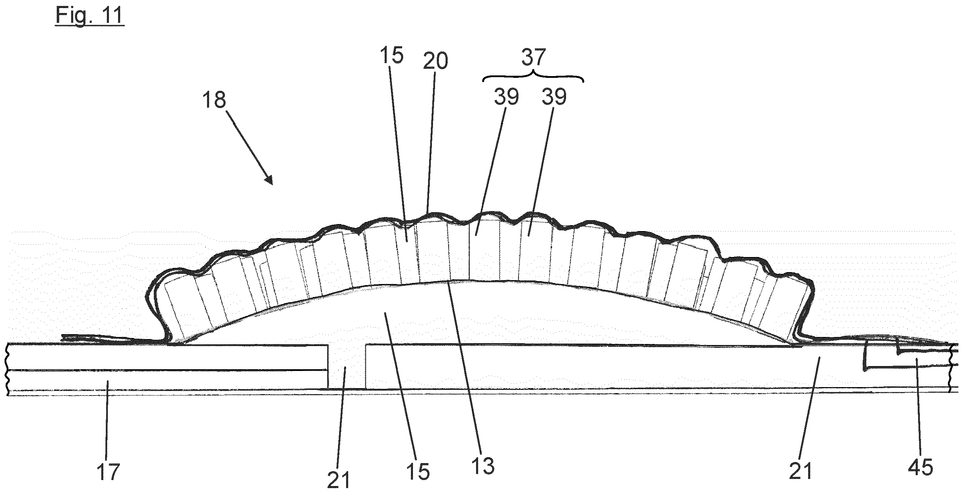

In der Figur 11 ist ein drittes Ausführungsbeispiel gezeigt, in dem die Stelleinheit 18 aus zwei, als Hebekissen wirkende Membrane 13, 20 aufgebaut ist, und zwar aus einer inneren Membran 13 und einer äußeren Membran 20. Die beiden Membrane 13, 20 sind in einer Hubrichtung beziehungsweise in einer Bauteil-Dickenrichtung übereinander positioniert. Die Druckkammern 15 beider Membrane 13, 20 können über Druckleitungen 17, 45 voneinander unabhängig pneumatisch angesteuert werden.

Wie aus der Figur 11 hervorgeht, ist die innere Membran 13 - analog zu dem ersten Ausführungsbeispiel der Figuren 6 bis 8 - mit der 3D-Struktur 37 ausgebildet. Die innere 3D-Struktur 37 ist von der äußeren Membran 20 überdeckt. Entsprechend ist die innere 3D-Strukur 37 in der Druckkammer 15 der äußeren Membran 20 angeordnet, die über die Druckleitung 45 pneumatisch ansteuerbar ist.

Beispielhaft ist in der Figur 11 die Druckkammer 15 der inneren Membran 13 mit Überdruck angesteuert, wodurch sich die innere Membran 13 sphärisch aufwölbt. Gleichzeitig ist die Druckkammer 15 der äußeren Membran 20 über die Druckleitung 45 mit Unterdruck beaufschlagt, wodurch - analog zur Figur 10 - die Membran 20 in die Zwischenräume 40 zwischen den zylindrischen Stiften 39 der inneren 3D-Struktur 37 eingezogen ist. Auf diese Weise zeichnet sich die innere 3D-Struktur 37 in der äußeren Membran 20 ab, so dass die äußere Membran 20 mit einer an die 3D-Struktur 37 konturangepassten Membran-Oberfläche ausgebildet ist.

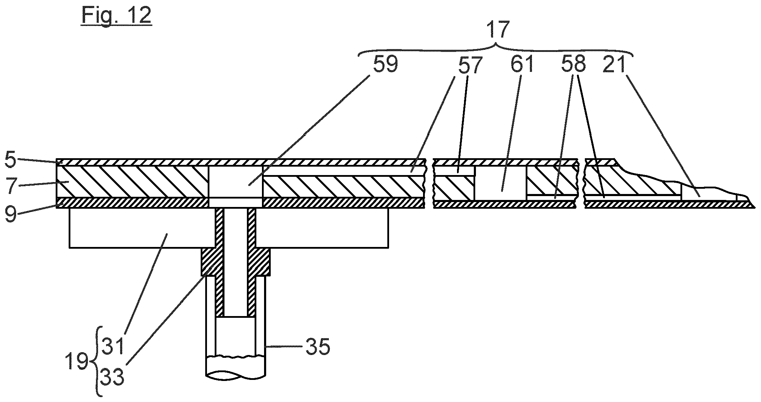

Wie aus der Figur 12 hervorgeht, ist - im Unterschied zum Vergleichsbeispiel (Figuren 1 bis 5) - die Druckleitung 17 nicht nur an der Unterseite der Funktionsträgerlage 7 verlegt (das heißt in einer unteren Bauteilebene E1). Vielmehr ist die Druckleitung 17 in ihrem Verlauf zwischen der Anschluss-/Verteilereinheit 19 und der pneumatischen Stelleinheit 18 in Teilleitungen 57, 58 unterteilt, die in Bauteil-Dickenrichtung zueinander höhenversetzt verlaufen. In der Figur 12 ist die zur Anschluss-/Verteilereinheit 19 führende Teilleitung 57 in einer dekorseitigen, oberen Bauteilebene E2 positioniert. Diese Teilleitung 57 mündet in einen, sich in Bauteil-Dickenrichtung erstreckenden Anschlussdurchlass 59, der in Strömungsverbindung mit der Anschluss-/Verteilereinheit 19 ist. Die zur pneumatischen Stelleinheit 18 führende Teilleitung 58 verläuft dagegen in der unteren Bauteilebene E1 und mündet in den, sich in Bauteil-Dickenrichtung erstreckenden Strömungsdurchlass 21, der in Strömungsverbindung mit der pneumatischen Stelleinheit 18 ist. Die beiden Teilleitungen 57, 58 sind gemäß der Figur 12 über einen sich in der Bauteil-Dickenrichtung erstreckenden Verbindungsdurchlass 61 miteinander in Verbindung.

Eine mediumdichte sowie gegen mechanische Belastung robuste Befestigung der Anschluss-/Verteilereinheit 19 ist von großer Bedeutung: Dies wird im Vergleichsbeispiel (Figuren 1 bis 5) durch Zwischenklemmung des flächigen Bauteils 1 zwischen der Luftanschlussleiste und der Konterleiste 22 erreicht. In Abkehr davon ist in der Figur 12 (sowie in der Figur 6b) die Anschluss-/Verteilereinheit 19 nur einseitig, das heißt nur an der Bauteil-Unterseite zum Beispiel in Stoffschlussverbindung angebunden. In der Einbaulage des flächigen Bauteils 1 ist daher die Anschluss-/Verteilereinheit 19 komplett sichtgeschützt hinter dem Bauteil 1 positioniert.

Eine einwandfreie Verbindungsfestigkeit zwischen der Anschluss-/Verteilereinheit 19 und dem flächigen Bauteil 1 wird gemäß der Figur 12 wie folgt gewährleistet: So verläuft die zur Anschluss-/Verteilereinheit 19 führende Teilleitung 57 in der dekorseitigen, das heißt oberen Bauteilebene E2. In der unteren Bauteilebene E1 ist somit ausreichend tragendes Bauteil-Vollmaterial (ohne Leitungs-Vertiefungen) vorhanden, wodurch die Bauteil-Unterseite eine stabile Anbindungsbasis für die Anschluss-/Verteilereinheit 19 bildet.

Wie oben erwähnt, verläuft die zur Stelleinheit 18 führende Teilleitung 38 in der unteren Bauteilebene E1. In der oberen Bauteilebene E2 ist somit ausreichend tragendes Bauteil-Vollmaterial (ohne Leitungs-Vertiefungen) gebildet, wodurch die Bauteil-Oberseite eine stabile Abstützbasis für das Druckmedium in der Druckkammer 15 der Membran 13 bereitstellt.

### Bezuqszeichenl iste

| | | | |
|---|---|---|---|
| 1 | Bauteil | 40 | Zwischenraum |
| 3 | Dekorlage | 41 | Bauteil-Bereich |
| 5 | obere Elastomerlage | 43 | Stirnseite |
| 7 | Funktionsträgerlage | 45 | Druckleitung |
| 9 | untere Elastomerlage | 57, 58 | Teilleitungen |
| 10 | LED-Lage | 59 | Anschlussdurchlass |
| 11 | Dekorlagen-Segmente | 61 | Verbindungsdurchlass |
| 12 | Segmentfeld | E1 | untere Bauteilebene |
| 13 | Membran | E2 | obere Bauteilebene |
| 14 | Freischnitt | | |
| 15 | Druckkammer | | |
| 16 | Dekorlagen-Grundkörper | | |
| 17 | Druckleitungen | | |
| 18 | pneumatische Stelleinheit | | |
| 19 | Anschluss-/Verteilereinheit | | |
| 21 | Strömungsdurchlass | | |
| 22 | Konterleiste | | |
| 23 | LED | | |
| 25 | Elastomermaterial | | |
| 27 | Lichtdurchlass | | |
| 29 | Vertiefung | | |
| 31 | Anschlussplatte | | |
| 33 | Anschlussstutzen | | |
| 35 | Versorgungsleitung | | |
| 37 | 3D-Struktur | | |
| 39 | Vorsprung | | |

## Patentansprüche

1. Stelleinrichtung mit einem flächigen, plattenförmigen Bauteil (1) mit zumindest einer, bevorzugt einer Mehrzahl von pneumatischen oder hydraulischen Stelleinheiten (18), wobei die Stelleinheit (18) mit zumindest einer als Hebekissen wirkenden Membran (13, 20) ausgebildet ist, die eine mit Druckmedium, zum Beispiel Druckluft, ein anderes Gas oder Flüssigkeit, befüllbare Druckkammer (15) begrenzt, **dadurch gekennzeichnet, dass** die Druckkammer (15) der Membran (13, 20) mit Überdruck und/oder Unterdruck ansteuerbar ist, und zwar unter Formänderung der Membran (13, 20), und dass der Membran (13, 20) eine 3D-Struktur (37) zugeordnet ist.

2. Stelleinrichtung nach Anspruch 1, **dadurch gekennzeichnet, dass** die 3D-Struktur (37) innerhalb der Druckkammer (15) der als Hebekissen wirkenden Membran (13) positioniert ist, und dass insbesondere
sich bei einem ersten Druckniveau in der Druckkammer (15), insbesondere bei Unterdruck, die 3D-Struktur (37) sich in der Membran (13, 20) abzeichnet, so dass insbesondere, von einer Bauteil-Dekorseite betrachtet, die Membran (13, 20) mit einer an die 3D-Struktur (37) konturangepassten Membran-Oberfläche ausgebildet ist, und/oder dass sich bei einem zweiten Druckniveau, insbesondere bei Überdruck oder im drucklosen Zustand, die in der Membran (13, 20) gebildete Abzeichnung der 3D-Struktur (37) auflöst und/oder die Membran-Oberfläche glattflächig ist.

3. Stelleinrichtung nach Anspruch 1 oder 2, **dadurch gekennzeichnet,**
**dass** das Bauteil (1) einen Mehrlagenaufbau aufweist, mit einer Funktionsträgerlage (7), die an ihrer Dekorseite und insbesondere an ihrer davon abgewandten Unterseite mit einer Elastomerlage (5, 9) überdeckt ist, und dass insbesondere die Membran (13) ein materialeinheitlicher und/oder einstückiger Bestandteil der bevorzugt dekorseitigen Elastomerlage (5) ist, und dass insbesondere die Elastomerlage (5) im Membranbereich anbindungsfrei gegenüber der Funktionsträgerlage (7) ist, und dass insbesondere
die 3D-Struktur (37) materialeinheitlich und/oder einstückig an der Funktionsträgerlage (7) angeformt ist.

4. Stelleinrichtung nach einem der vorhergehenden Ansprüche, **dadurch gekennzeichnet, dass** die 3D-Struktur (37) eine Mehrzahl von zum Beispiel regelmäßig angeordneten und/oder voneinander beabstandeten Vorsprüngen (39) aufweist, die bevorzugt über eine Profilhöhe von der Funktionsträgerlage (7) abragen.

5. Stelleinrichtung nach einem der vorhergehenden Ansprüche, **dadurch gekennzeichnet, dass** die 3D-Struktur (37) auf einer der Bauteil-Dekorseite zugewandten Membran-Oberfläche ausgebildet ist, und/oder dass bei Überdruck in der Druckkammer (15) die Membran (13) sphärisch aufgewölbt ist, und/oder dass bei Unterdruck in der Druckkammer (15) oder im drucklosen Zustand die Membran (13) zusammengezogen ist, so dass insbesondere durch Druckänderung in der Druckkammer (15) sich unterschiedliche Ausrichtungen der Vorsprünge (39) der 3D-Struktur (37) einstellen.

6. Stelleinrichtung nach einem der vorhergehenden Ansprüche, **dadurch gekennzeichnet,**
**dass** die Stelleinheit (18) aus zwei als Hebekissen wirkende Membrane (13, 20) aufgebaut ist, nämlich einer inneren Membran (13) und einer äußeren Membran (16) die in einer Hubrichtung beziehungsweise Bauteil-Dickenrichtung übereinander positioniert sind, und dass insbesondere die Druckkammern (15) der beiden Membrane (13, 20) voneinander unabhängig ansteuerbar sind, und dass insbesondere
die 3D-Struktur (37) auf der, der Bauteil-Dekorseite zugewandten Oberfläche der inneren Membran (13) ausgebildet ist, dass insbesondere die 3D-Struktur (37) von der äußeren Membran (20) überdeckt ist, und dass sich insbesondere bei einem ersten Druckniveau in der Druckkammer (15) der äußeren Membran (20), insbesondere bei Unterdruck, die 3D-Struktur (37) in der äußeren Membran (20) abzeichnet, so dass insbesondere, von einer Bauteil-Dekorseite betrachtet, die äußere Membran (20) mit einer an die innere 3D-Struktur (37) konturangepassten Membran-Oberfläche ausgebildet ist, und/oder dass sich bei einem zweiten Druckniveau, insbesondere bei Überdruck oder im drucklosen Zustand, die in der äußeren Membran (20) gebildete Abzeichnung der 3D-Struktur (37) auflöst und/oder die Membran-Oberfläche glattflächig ist.

7. Stelleinrichtung nach einem der vorhergehenden Ansprüche, **dadurch gekennzeichnet, dass** die Stelleinheit (18) über eine im Bauteil (1) integrierte Druckleitung (17) mit einer bauteilseitigen Anschlussstelle verbunden ist, die mit einer Druckquelle koppelbar ist, dass die Druckleitung (17) in ihrem Verlauf zwischen der Anschlussstelle und der Stelleinheit (18) in Teilleitungen (57, 58) unterteilt ist, die in Bauteil-Dickenrichtung zueinander höhenversetzt sind, so dass insbesondere eine obere Teilleitung (57) in einer, einer Bauteil-Dekorseite zugewandten oberen Bauteilebene (E2) verläuft, während eine untere Teilleitung (38) in einer davon abgewandten unteren Bauteilebene (E1) verläuft, und dass insbesondere die beiden Teilleitungen (57, 58) über einen in Bauteil-Dickenrichtung sich erstreckenden Verbindungsdurchlass (61) miteinander verbunden sind.

8. Stelleinrichtung nach Anspruch 7, **dadurch gekennzeichnet, dass** das Bauteil (1) einen Mehrlagenaufbau aufweist, mit einer Funktionsträgerlage (7), die an ihrer Dekorseite und an ihrer davon abgewandten Unterseite mit einer Elastomerlage (5, 9) überdeckt ist, und/oder dass die Teilleitung (57, 58) als eine nutförmige Vertiefung in die Funktionsträgerlage (7) eingearbeitet ist, und dass insbesondere die nutförmige Vertiefung von der Elastomerlage (5, 9) überdeckt ist unter Bildung der im Querschnitt geschlossenen Teilleitung (57, 58), und/oder dass insbesondere der sich in der Bauteil-Dickenrichtung erstreckende Verbindungsdurchlass (61) die Funktionslage (7) durchsetzt und/oder in die obere und untere Teilleitung (57, 58) mündet.

9. Stelleinrichtung nach einem der Ansprüche 7 oder 8, **dadurch gekennzeichnet, dass** die Anschlussstelle mit einer Anschluss-/Verteilereinheit (19) ausgebildet ist, an der die Druckquelle angeschlossen ist, und dass insbesondere die Anschluss-/Verteilereinheit (19) eine Ventilanordnung aufweist, die von einem elektronischen Steuergerät betätigbar ist, um die Stelleinheit (18) anzusteuern, und/oder dass insbesondere
die Anschluss-/Verteilereinheit (19) einseitig in Stoffschlussverbindung mit der von der Dekorseite abgewandten Bauteil-Unterseite ist, und/oder dass insbesondere
die zur Anschlussstelle führende Teilleitung (57) in der dekorseitigen, oberen Bauteilebene (E2) verläuft und/oder in einen sich in Bauteil-Dickenrichtung erstreckenden Anschlussdurchlass (59) mündet, der insbesondere in Strömungsverbindung mit der Anschluss-/Verteilereinheit (19) ist, und/oder dass insbesondere
die zur Stelleinheit (18) führende Teilleitung (58) in der unteren Bauteilebene (E1) verläuft und/oder in einen sich in Bauteil-Dickenrichtung erstreckenden Strömungsdurchlass (21) mündet, der insbesondere in Strömungsverbindung mit der Stelleinheit (18) ist.
